# EUROPEAN PATENT SPECIFICATION

(11) **EP 3 713 194 B1**
(45) Date of publication and mention of the grant of the patent: **16.08.2023**
(21) Application number: 18876673.7
(22) Date of filing: 10.05.2018
(51) Int. Cl.: H04L 1/16, H04L 1/08

(54) **DUAL-SYSTEM SYNCHRONIZATION-BASED RSSP-I SECURE COMMUNICATION METHOD**
DUAL-SYSTEM-SYNCHRONISATIONSBASIERTES RSSP-I-SICHERES KOMMUNIKATIONSVERFAHREN
PROCÉDÉ DE COMMUNICATION SÉCURISÉE RSSP-I FAISANT APPEL À UNE SYNCHRONISATION DE DEUX SYSTÈMES

(30) Priority: 13.11.2017 CN 201711113161
(43) Date of publication of application: 23.09.2020
(73) Proprietor: CRSC RESEARCH & DESIGN INSTITUTE GROUP CO., LTD., Fengtai District Beijing 100070 (CN)
(72) Inventor: WANG, Yimin, Beijing 100070 (CN); LIU, Zhen, Beijing 100070 (CN); ZUO, Lin, Beijing 100070 (CN); GUO, Weiwei, Beijing 100070 (CN); HUANG, Yaqian, Beijing 100070 (CN); LI, Qiang, Beijing 100070 (CN); YU, Qing, Beijing 100070 (CN); MENG, Qingyao, Beijing 100070 (CN)
(74) Representative: Meissner Bolte Partnerschaft mbB
(86) International application number: PCT/CN2018/086257
(87) International publication number: WO 2019/091072

(56) References cited:
- WO-A1-2012/155837
- CN-A- 101 149 725
- CN-A- 101 252 494
- CN-A- 101 312 413
- CN-A- 103 345 896
- CN-A- 106 157 621
- CN-A- 108 011 698
- US-A1- 2015 171 893
- WANG, PING: "The Design and Implementation of Digital Transmission System for Semi-Automatic Block Control Information", Master Thesis, 15 January 2013 (2013-01-15), pages 1-81, XP009520877, ISSN: 1674-0246
- Chen Chen: "Research on Railway Signal Safety Communication Protocol of RSSP-1 Applied in the Safety Information Transmission Between the Existing Line Stations", Master Thesis, 15 December 2013 (2013-12-15), pages 1-81, XP009520878, ISSN: 1674-0246

## Description

The present application claims priority of the Chinese Patent Application No. 201711113161.1 filed on November 13, 2017.

### TECHNICAL FIELD

The present disclosure relates to a technical field of safety communication, and particularly, to a Railway Signal Safety Communication Protocol I (RSSP-I) safety communication method based on dual-system synchronization.

### BACKGROUND

A RSSP-I safety communication protocol is applicable to safety related communication in a closed transmission system, and used for ensuring safety of data interaction in a closed transmission system environment, ensuring safety of data transmission between safety related products and promoting reliability and availability of data transmission.

Currently, for existing RSSP-I safety communication protocols, in the data sending process, an active system sends data comprising 0×01, and a standby system sends data comprising 0×02; and an A machine sends data comprising 0×80, and a B machine sends data comprising 0×81, wherein when a protocol interaction type in a message header is 0×01, it indicates that a receiving end can consider that such a frame is valid only after synchronous time sequence correction is true, and 0×01 is applicable to safety data sent by an active machine; when the protocol interaction type in the message header is 0×02, it indicates that the receiving end can consider that the frame is a valid frame without carrying out synchronous checking (the receiving end does not trigger an SSE frame), 0×02 is applicable to safety data sent by a standby machine to show that a physical channel is normally connected, but a specific user data packet is not used for carrying out functional safety operation. Because data sent by the active system is inconsistent with that sent by the standby system, 02 data at a sending end of the standby system is not subjected to safety checking and is just heartbeat data, so that a bandwidth of a standby system channel is wasted.

Patent application US 2015/0171893 A1 aims to disclose a fault-tolerant failsafe computer system including an inter-processor communication channel including a transmission control module that encodes a first data packet and communicates a first encoded copy of the first data packet and a second encoded copy of the first data packet. The system includes a receiver control module that i) receives a first encoded copy of a second data packet and a second encoded copy of the second data packet and ii) decodes the first encoded copy and the second encoded copy. The system further includes a de-duplication module that receives a plurality of data packets and communicates at least one unique data packet of the plurality of data packets.

### SUMMARY

The invention is defined by the independent claim.

The present disclosure aims to provide a RSSP-I safety communication method based on dual-system synchronization so as to ensure consistency of data sent by main and standby systems and improve a utilization rate of a bandwidth of a standby system channel.

In order to fulfill the aim above, the present disclosure adopts the technical solution of: providing a RSSP-I safety communication method based on dual-system synchronization, including steps of:
Adopting 0×01 for both active machine and standby machine protocol interaction types in a message header of a Real-time Safety Data (RSD) message, and adopting 0×82 for both message types of an active machine and a standby machine;
Changing data sent by the active machine and the standby machine into a plurality of copies of completely same data by adopting a redundancy technology; and
Sending the plurality of copies of completely same data to a receiving end by the active machine and the standby machine.

Wherein, when the standby machine protocol interaction type adopts 0×01, the RSSP-I safety communication method further includes:
Sending a data transmission request to the receiving end by the standby machine through the RSD message; and
Sending, by the receiving end, an SSE before receiving data sent by the standby machine, and receiving the data after it is determined that an SSR is true to confirm that such frame of data is valid.

Wherein, in the message header in the RSD message, a protocol interaction type adopts 0×01, and a message type adopts 0×82;
In a message header of an SSE message, a protocol interaction type adopts 0×01, and a message type adopts 0×90; and
In a message header of an SSR message, a protocol interaction type adopts 0×01, and a message type adopts 0×91.

Compared to the prior art, the present disclosure has technical effects that: according to the present disclosure, in the message header of the RSD message, both the active machine and standby machine protocol interaction types adopt 0×01, the message types of both the active machine and the standby machine adopt 0×82, i.e., the main and standby systems are not distinguished, and the standby system sends data of the active system, so that the data of dual systems can be kept consistent completely, thereby improving the utilization rate of the bandwidth of the standby system channel and improving reliability and safety of data transmission.

### BRIEF DESCRIPTION OF THE DRAWINGS

Specific embodiments of the present disclosure will be described in detail in connection with the drawings:
FIG 1 is a flow schematic diagram of a RSSP-I safety communication method based on dual-system synchronization in the present disclosure; and
FIG 2 is a structural schematic diagram of adopting a message in the process of transmitting data by a RSSP-I safety communication protocol in the present disclosure.

### DETAILED DESCRIPTION

In order to further illustrate the characteristics of the present disclosure, please refer to the detailed illustration and drawings related to the present disclosure. The drawings are merely used for reference and illustration, but not intended to define the scope of the present disclosure.

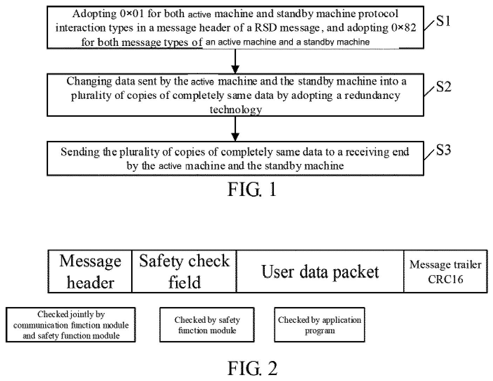

As shown in FIG 1, an embodiment discloses a RSSP-I safety communication method based on dual-system synchronization, including steps of:
S1: adopting 0×01 for both active machine and standby machine protocol interaction types in a message header of a RSD message, and adopting 0×82 for both message types of an active machine and a standby machine;
S2: changing data sent by the active machine and the standby machine into a plurality of copies of completely same data by adopting a redundancy technology; and
S3: sending the plurality of copies of completely same data to a receiving end by the active machine and the standby machine.

It should be noted that in the practical application, when a RSSP-I safety communication protocol is adopted to transmit data, a standard message structure is adopted. As shown in FIG 2, RSSP-I safety protocol library software can pack and unpack three types of messages stipulated by the RSSP-I safety communication protocol, including: RSD, SSE and SSR.

Wherein, specific formats of RSD, SSE and SSR messages are as follows:
The specific format of the RSD message is that:
   Message structure field name size value remarks Message header protocol interaction type 1 byte 0×01 application to a case of real-time periodic transmission interaction
   Message type 1 byte 0×82 0×82 represents that data sent by an A machine and a B machine is consistent;
   Source address 2 bytes unique address of a communication node reserve 0×0000, 0×0000 is an invalid address value and cannot be adopted in the configuring process Destination address 2 bytes unique address of a communication node reserve 0×FFFF, 0×FFFF represents a broadcast address
   Safety check field sequence number 4 bytes sequence number
   Safety data length 2 bytes total user data packet byte number +8
   Safety check channel 1 SVC_1 4 bytes CRC_1^SID_1^T_1(N)^SCW_1
   CRC_1 calculates CRC32 only for a user data packet
   Safety check channel 2 SVC_2 4 bytes CRC_2^SID_2^T_2(N)^SCW_2 CRC_2 calculates CRC32 only for the user data packet,
   User data packet safety application data byte number of safety application data application data contents which need to be transmitted
   Message trailer CRC16 CRC16 2 bytes generated according to the message header, the safety check field and the user data packet
The specific format of the SSE message is that:
   Message structure field name size value remarks
   Message header protocol interaction type 1 byte 0×01
   Message type 1 byte 0×90
   Source address 2 bytes the same as the RSD format
   Destination address 2 bytes the same as the RSD format
   Safety check field sequence number 4 bytes NE requester's
   SSE channel 1 SEQENQ_1 4 bytes SID_1^T_1(NE)
   SSE channel 2 SEQENQ2 4 bytes SID_2^T_2(NE)
   Message trailer CRC16 frame CRC16 4 bytes generated according to the message header and the safety check field
A specific format of the SSR message is that:
   Message structure field name size value remarks Message header protocol interaction type 1 byte 0×01
   Message type 1 byte 0×91
   Source address 2 bytes the same as the RSD format
   Destination address 2 bytes the same as the RSD format
   Safety check field sequence number of responder 4 bytes NR
   Sequence number of requester 4 bytes NE requester's, i.e., NE value in SSE Time sequence initialization channel 1 4 bytes SEQENQ_1^SID_1^T_1(NR)^ DATAVER_1 SEQENQ_1 is an SSE mid-value
   Time sequence initialization channel 2 4 bytes SEQENQ_2^SID_2^T_2(NR)^ DATAVER_2 SEQENQ2 is an SSE mid-value
   Data version number 1 byte 0×01 reserve a fixed value Message trailer CRC16 frame CRC16 4 bytes the same as the RSD format generated according to the message header and the safety check field

It should be noted that in the embodiment, the active machine and the standby machine are not distinguished, and the standby system sends the data of the active system, so that the data sent by the active machine and the standby machine is completely consistent, the data sent by the standby machine is also safety data, thereby improving a utilization rate of a standby machine channel and improving safety reliability of data transmission.

## Claims

1. A Railway Signal Safety Communication Protocol I, RSSP-I, safety communication method based on dual-system synchronization, **characterized by**:
adopting 0×01 for both active machine and standby machine protocol interaction types in a message header of a Real-time Safety Data, RSD, message, and adopting 0×82 for both message types of an active machine and a standby machine;
changing data sent by the active machine and the standby machine into a plurality of copies of completely same data by adopting a redundancy technology; and
sending the plurality of copies of completely same data to a receiving end by the active machine and the standby machine;
wherein dual-system refers to the active machine and the standby machine pair.

2. The RSSP-I safety communication method based on dual-system synchronization according to claim 1, when the standby machine protocol interaction type adopts 0×01, further comprising:
sending a data transmission request to the receiving end by the standby machine through the RSD message; and
sending, by the receiving end, a Sequence Start Enquiry, SSE, before receiving data sent by the standby machine, and receiving the data after it is determined that a Sequence Start Reply, SSR, is true to confirm that such frame of data is valid.

3. The RSSP-I safety communication method based on dual-system synchronization according to claim 1 or 2, wherein in the message header in the RSD message, a protocol interaction type adopts 0×01, and a message type adopts 0×82;
in a message header of an SSE message, a protocol interaction type adopts 0×01, and a message type adopts 0×90; and
in a message header of an SSR message, a protocol interaction type adopts 0×01, and a message type adopts 0×91.

## Patentansprüche

1. Sicherheitskommunikationsverfahren mit Eisenbahnsignalsicherheitskommunikationsprotokoll I, RSSP-I (RSSP-I, *Railway Signal Safety Communication Protocol I*)*,* basierend auf einer Dualsystemsynchronisation, **gekennzeichnet durch**:
Übernehmen von 0×01 für sowohl aktive Maschinen als auch Bereitschafts-Maschinenprotokollinteraktionstypen in einer Nachrichtenüberschrift einer Echtzeit-Sicherheitsdaten- RSD -Nachricht (RSD, *Real-time Safety Data*)*,* und Übernehmen von 0×82 für beide Nachrichtenarten einer aktiven Maschine und einer Bereitschaftsmaschine;
Verändern von Daten, die durch die aktive Maschine und die Bereitschaftsmaschine versandt wurden, in mehrere Kopien von komplett gleichen Daten, indem eine Redundanztechnologie übernommen wird; und
Versenden der mehreren Kopien der komplett gleichen Daten an eine Empfangsseite durch die aktive Maschine und die Bereitschaftsmaschine;
wobei sich Dualsystem auf das Paar aus der aktiven Maschine und der Bereitschaftsmaschine bezieht.

2. RSSP-I-Sicherheitskommunikationsverfahren basierend auf einer Dualsystemsynchronisation nach Anspruch 1, wenn der Bereitschaftsmaschinenprotokollinteraktionstyp 0×01 übernimmt, darüber hinaus umfassend:
Verschicken einer Datenübertragungsanforderung an die Empfangsseite durch die Bereitschaftsmaschine über die RSD-Nachricht; und
Verschicken durch die Empfangsseite einer Sequenzstartabfrage SSE (SSE, *Sequence Start Enquiry*)*,* bevor durch die Bereitschaftsmaschine verschickte Daten empfangen werden, und Empfangen der Daten, nachdem bestimmt wurde, dass eine Sequenzstartanwort SSR (SSR, *Sequence Start Reply*) wirklich bestätigt, dass ein solcher Datenrahmen gültig ist.

3. RSSP-I-Sicherheitskommunikationsverfahren basierend auf einer Dualsystemsynchronisation nach Anspruch 1 oder 2, wobei in der Nachrichtenüberschrift in der RSD-Nachricht, ein Protokollinteraktionstyp 0×01 übernimmt, und ein Nachrichtentyp 0×82 übernimmt,
in einer Nachrichtenüberschriftschrift einer SSE-Nachricht, ein Protokollinteraktionstyp 0×01 übernimmt und ein Nachrichtentyp 0×90 übernimmt; und
in einer Nachrichtenüberschrift einer SSR-Nachricht, ein Protokollinteraktionstyp 0×01 übernimmt und ein Nachrichtentyp 0×91 übernimmt.

## Revendications

1. Procédé de communication sécurisée de protocole de communication sécurisée de signal ferroviaire I (RSSP-I, *Railway Signal Safety Communication Protocol I*) basé sur une synchronisation de système dual, **caractérisé par** :
l'adoption de 0×01 à la fois pour des types d'interaction de protocole de machine active et de machine en veille dans un en-tête de message d'un message de données sécurisées en temps réel (RSD, *Real-time Safety Data*)*,* et l'adoption de 0×82 à la fois pour les deux types de message d'une machine active et d'une machine en veille ;
le changement de données envoyées par la machine active et la machine en veille en une pluralité de copies de données entièrement identiques en adoptant une technologie de redondance ; et
l'envoi de la pluralité de copies de données entièrement identiques à un extrémité réceptrice par la machine active et la machine en veille ;
sachant que le système dual se rapporte à la paire de machine active et de machine en veille.

2. Le procédé de communication sécurisée RSSP-I basé sur une synchronisation de système dual selon la revendication 1, lorsque le type d'interaction de protocole de machine en veille adopte 0×01, comprenant en outre :
l'envoi d'une demande de transmission de données à l'extrémité réceptrice par la machine en veille via le message RSD ; et
l'envoi, par l'extrémité réceptrice, d'une requête de démarrage de séquence (SSE, *Sequence Start Enquiry*) avant de recevoir des données envoyées par la machine en veille, et la réception des données après qu'il est déterminé qu'une réponse de démarrage de séquence (SSR, *Sequence Start Reply*) est vraie pour confirmer qu'un tel cadre de données est valide.

3. Le procédé de communication sécurisée RSSP-I basé sur une synchronisation de système dual selon la revendication 1 ou 2, sachant que dans l'en-tête de message dans le message RSD, un type d'interaction de protocole adopte 0×01, et un type de message adopte 0×82 ;
dans un en-tête de message d'un message SSE, un type d'interaction de protocole adopte 0×01, et un type de message adopte 0×90 ; et
dans un en-tête de message d'un message SSR, un type d'interaction de protocole adopte 0×01, et un type de message adopte 0×91.
